# EUROPEAN PATENT APPLICATION

(11) **EP 0 713 045 A1**
(43) Date of publication of application: **22.05.1996**
(21) Application number: 95308116.3
(22) Date of filing: 14.11.1995
(51) Int. Cl.: F16L 21/03, F16L 21/035

(54) **Pipe coupling**

(30) Priority: 17.11.1994 GB 9423225
(71) Applicant: HEPWORTH BUILDING PRODUCTS LIMITED, Sheffield S30 5HG (GB)
(72) Inventor: Brook, Alan, Belthorn, Blackburn BB1 2PN (GB)
(74) Representative: Mounteney, Simon James

(57) **Abstract**

A spigot end or a socket (not illustrated) for a pipe (10) comprises a coaxial dimensioning ring (20) and a sealing ring (30) arranged coaxially with the dimensioning ring on an outer or inner surface thereof, as appropriate. The sealing ring (30) is at least partially embedded in the dimensioning ring. This avoids an inappropriate sealing ring being fitted to the socket or spigot on site.

A process for manufacturing the arrangement is disclosed.

## Description

The present invention relates to a pipe coupling. More particularly, but not exclusively, the invention relates to a pipe coupling suitable for use in conjunction with clay-based piping systems.

One disadvantage of some piping, such as clay piping, is that it is difficult to control tolerance levels during manufacturing processes. To overcome this, it is known to provide an external perimeteral dimensioning ring encircling a spigot end and also provide an internal perimeteral dimensioning ring located within the mouth of a socket. These rings are normally formed from polyester or polyurethane and are moulded onto the spigot end and into the socket after the manufacture of the spigot and socket bodies. This is achieved by locating the spigot and/or socket mouth in an appropriate mould and filling with the polyester or polyurethane. The dimensions of the rings can be controlled much more accurately than the bodies of the spigot and socket, thereby improving the manufacturing tolerances of the spigot end and socket mouth as a whole. As a result, the two fit together much more closely, thereby providing a better joint.

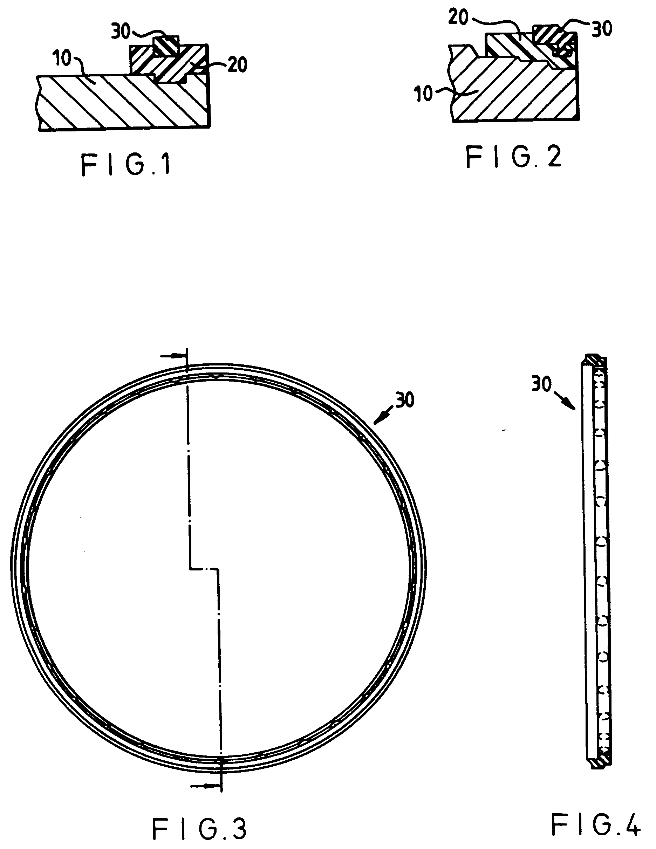

To effect a seal between the spigot and socket, it is known to provide a rubber sealing ring between the two. This sealing ring takes the form of a simple band which is accommodated within an annular recess provided in the external perimeter of the dimensioning ring provided about the spigot end. An example of this is shown in Figure 1. In this figure it can be seen that polyester dimensioning ring 20 encircles the spigot end 10, onto which it is moulded. A rubber sealing band 30 fits within an external annular recess in the polyester ring 20. It is this rubber sealing band 30 which effects a seal between the spigot end and a socket into which the spigot end is inserted.

This spigot arrangement has proved to be very successful. However, the sealing band is detachable from the polyester ring and is, indeed, often supplied separately from the polyester ring. Due to this, it would be possible for a labourer to fit a band of an incorrect size over the polyester ring. Whilst the mistake would be immediately apparent if the selected band were too large, this would is not necessarily be the case if the band were too small. Whilst an undersized band may be difficult to fit, fitting can often still be possible due to the elasticity of the rubber. If this is the case, it is likely that it would appear easier than normal to insert the spigot end into the socket, unfortunately not to the displeasure of whoever would be performing the assembly operation. As a result an inadequate seal is provided, which may lead to leakage.

The present invention, therefore, sets out to provide an improved spigot end or socket, incorporating a dimensioning ring and a seal, wherein the arrangement is such as to deter an inappropriate sealing ring from being fitted.

According to the present invention there is provided a spigot end or socket for a pipe; comprising a coaxial dimensioning ring, and a sealing ring arranged coaxially with the dimensioning ring on an outer or inner surface thereof; wherein the sealing ring is at least partially embedded in the dimensioning ring.

Preferably, the dimensioning ring is factory moulded to the pipe spigot or socket and is formed from polyester or polyurethane. The sealing ring may be formed from rubber or some other elastomer. The pipe may be formed from clay, concrete or cement.

In one preferred embodiment, the dimensioning ring is configured to encircle an axial end region of a spigot and the sealing ring comprises a radially inwardly projecting anchor portion and the dimensioning ring is moulded so as to surround the anchor portion at least partially. Preferably, the anchor portion is annular and comprises one or more apertures extending axially therethrough, for allowing a through-flow of material for forming the dimensioning ring during a moulding process. In an alternative embodiment, the anchor portion is keyed to the dimensioning ring by a mechanical fixation. The mechanical fixation may be a snap-fit engagement.

In a preferred embodiment, the anchor portion is axially off-set from a primary sealing surface of the sealing ring.

Preferably, the sealing ring is located with the anchor portion closer to the axial end of the pipe than is the said primary sealing surface.

The anchor portion may be formed from a radially inner ring connected to a radially inner surface of a body portion of the sealing ring by a plurality of radially extending spokes, at least one of which may be a sprue. The radially inner ring may be in the form of a generally flat band.

In another alternative embodiment, the sealing ring comprises a radially outwardly projecting anchor portion and the dimensioning ring is moulded so as to surround the anchor portion at least partially. Preferably the anchor portion is annular and comprises one or more apertures extending axially therethrough, for allowing a through-flow of material for forming the dimensioning ring during a moulding process.

In a preferred embodiment, the anchor portion is axially off-set from a primary sealing surface of the sealing ring.

Preferably, the sealing ring is located with the anchor portion closer to the socket mouth than is the primary sealing surface.

The anchor portion may be formed by a radially outer ring connected to a radially outer surface of a body portion of the sealing ring by a plurality of spokes, at least one of which may be a sprue. The radially outer ring may be a flat band.

Because the sealing ring is fixed to the dimensioning ring, it is not possible for a labourer to confuse sealing rings for different pipe dimensions. By providing apertures in the anchor portion, it is possible for any fluid material which is to form the dimensioning ring to flow through and surround the anchor portion and, therefore, retain the sealing ring securely in place. As a result, the sealing ring can be used in conjunction with the general principles of known manufacturing techniques which will be described in detail below. Providing the apertures in the anchor portion in some cases causes the sealing ring, directly radially in-line with the anchor portion, to offer a non-constant resistance to radial deflection. By off-setting the primary sealing surface from the anchor portion in the axial direction, the sealing ring can offer a continuous resistance to radial deflection and, therefore, provide a uniform seal around the perimeter of the spigot or socket mouth. Furthermore, if the seal is damaged, the sealing ring can be torn from the dimensioning ring and the axial off-set, therefore, enables a replacement ring to be fitted without interference of any formations in the dimensioning ring caused by accommodation of the sealing ring during manufacturing.

According to the invention there is also provided a sealing ring for use in a spigot or socket as described above and including any or all of the features set out in relation thereto.

According to the invention there is also provided a process for manufacturing a pipe spigot or socket comprising, in any appropriate order, the steps of:
(i) locating a pipe end coaxially within or around an annular sealing ring;
(ii) introducing a fluid material between the pipe end and the annular sealing ring; and
(iii) allowing the fluid material to solidify and retain the sealing ring in position.

Preferably, the fluid material is polyester or polyurethane, but may be any other castable material ( even such as cement), and the sealing ring is formed from an elastomer, such as rubber. The pipe end and sealing ring may be located concentrically within a mould during the manufacturing process. The mould may contain an annular recess on a bottom surface thereof, the recess being provided with an annular seal for preventing the passage of molten material past an end surface of the pipe end. A closure ring may be used to close a junction between the sealing ring and a wall of the mould. The sealing ring may be provided with a radially inwardly or outwardly directed anchor portion. The anchor portion may comprise apertures and the fluid material may be caused to flow through the apertures, so as to surround, at least partially, the anchor portion.

An embodiment of the invention will now be described, by way of example, and with reference to the accompanying drawings in which:-
Figure 1 is a partial cross-section of an end portion of a known spigot;
Figure 2 is a partial cross-section of an end portion of a spigot in accordance with the present invention;
Figure 3 is a plan view of a sealing ring for use in a further spigot in accordance with the invention of Figure 2;
Figure 4 is a cross-section through the sealing ring of Figure 3;
Figure 5 is an enlarged view showing the cross-sectional detail of the sealing ring of Figure 3; and
Figure 6 is an enlarged partial cross-section of a spigot end in accordance with the invention in *in situ* in a mould, after formation.

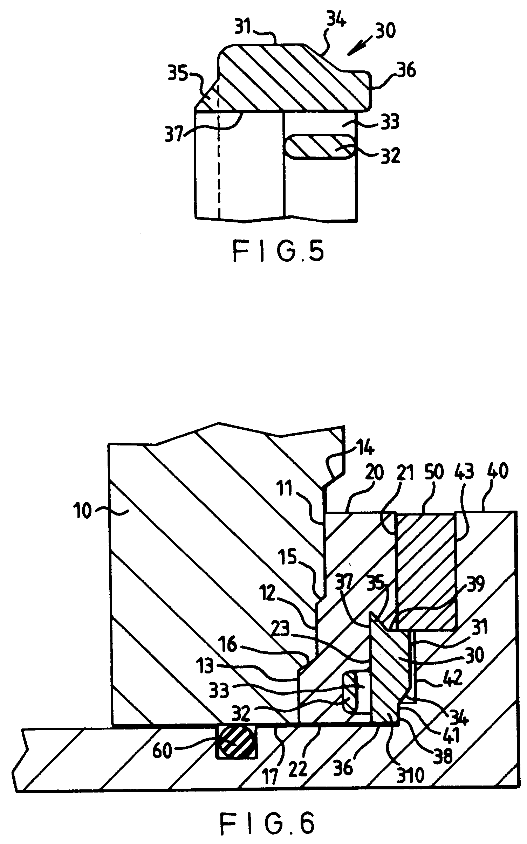

From Figures 2 and 6, in particular, which respectively show first and second embodiments of the invention, it can be seen that the spigot comprises a clay pipe 10, a polyester dimensioning ring 20 and a rubber sealing ring 30. If desired, the dimensioning ring 20 may alternatively be formed from polyurethane. Any appropriate elastomer may be used for the sealing ring 30, in place of rubber. The clay pipe 10 is conventional and is provided with a stepped outer surface 11,12,13, defining regions of decreasing diameter in the axially mouthward direction. The regions of decreasing diameter 11,12,13 are connected by intermediate conical surfaces 14,15,16. Dimensioning ring 20 is moulded around the spigot end and combines readily with the stepped surfaces 11,12 and 13 to provide a secure attachment. Because the dimensioning ring 20 is moulded onto the spigot end, the radially outer surface 21 of the dimensioning ring 20 can be controlled to a high tolerance, thereby enabling a spigot having an accurately formed external diameter to be produced.

Sealing ring 30 is moulded into the dimensioning ring 20 in a fixed fashion. It can be seen that the sealing ring 30 comprises a radially outer primary sealing surface 31, which is intended to effect a seal between the spigot and a socket.

A radially inner surface 37 of the sealing ring 30 is provided with an anchor portion. The anchor portion is partly defined by an annular band 32. The cross-section of the band 32 has its longest side aligned axially and has somewhat rounded ends, these being generally semi-circular. The band 32 is connected to the radially inner surface 37 of the sealing ring 30 by a plurality of spokes 33. Each spoke 33 is circular in cross-section. In the embodiment of Figure 6, each spoke has a diameter which corresponds to the longest dimension of the cross-section of the band 32. In the embodiment of Figure 2, each spoke has a narrower diameter.

The sealing ring 30, in each embodiment, is located with one axial end surface 36 generally flush with the mouth end surface 17 of the clay pipe. The intermediate dimensioning ring 20 also has one end surface 22 flush with surfaces 36 and 17, so as to present a single spigot end surface.

Each sealing ring 30 also comprises a neck region 310 towards the spigot end. This neck region 310 leads into the remainder of the sealing ring body via a conical surface 34, which is inclined radially outwardly in the axially inward direction of the spigot end. This conical surface 34 is to facilitate insertion of the spigot end into the mouth of a socket. During insertion, the neck of the spigot initially fits easily within the socket until conical surface 34 is reached, when the sealing ring is gradually compressed with further insertion, so as to provide a good seal.

The sealing ring 30 of the Figure 6 embodiment further comprises a tail 35, which is saw-toothed in cross-section. This tail serves to retain the axially innermost end of the sealing ring 30 in position within the contours of the dimensioning ring 20.

A method of manufacturing a spigot end of the type set out above will now be described, with particular reference to Figure 6.

As with conventional techniques, the clay pipe end 10 is inserted into a greased mould 40. An O-ring 60 is seated in an annular recess in the bottom of the mould, so as to provide a good seal between the mould bottom and the spigot end surface 17.

Unlike with conventional techniques, the sealing ring 30 is also inserted into the mould. The mould comprises wall portions 41 and 42 which are arranged to correspond generally with the external diameter of outer surfaces 31 and 38 of the sealing ring 30, so that the sealing ring is evenly supported within the mould. The mould 40 further comprises a rebate 43, in an upper region of its inner wall, which has a depth corresponding to the height of axially inner surface 39 of the sealing ring when located in position within the mould. The rebate 43 is for accommodating a greased closure ring 50, which has the dual purpose of defining a moulding surface for the radially outer surface of the dimensioning ring 20 and also for closing-off the junction between the radially outer surface 31 of the sealing ring 30 and the corresponding surface 42 of the mould, so as to prevent the passage of any liquid polyester. The height of the closure ring 50 corresponds with the required axial length of the dimensioning ring 20, so that surplus polyester can simply be skimmed off.

Once the O-ring 60, the clay pipe spigot end 10, the sealing ring 30 and the closure ring 50 are located in position within the mould 40, fluid polyester can be poured into the cavity between the radially outer wall of the clay pipe spigot end and the radially inner walls of the sealing ring 30 and the closure ring 50 until the cavity is filled. The polyester sets to handling hardness within about one minute.

Due to the fact that the anchor ring 32 is supported by a series of spokes 33, the fluid polyester can flow through the gaps between the spokes and, therefore, completely surround the anchor ring 32 and the spokes 33. This ensures that the anchor ring 32 is completely embedded in the dimensioning ring 20 once it is formed. Furthermore, the sealing ring tail 35 is also retained securely within the dimensioning ring, due to the fact that fluid polyester flows downwards past it in the radially outer and axially outer directions.

Once the polyester has solidified, the clay pipe is lifted out of the mould and the closure ring 50 can be removed.

The closure ring 50 is formed from PVC, and comprises a split, so as to define a 'c'-shape. Any appropriate semi-flexible plastic material may be used instead of PVC, however. As a result, it can be pushed over the sealing ring in the axially outer direction, with its removal being accommodated by its own deflection, so as to avoid damage to the sealing ring or polyester surface.

The sealing ring 30 provides a good seal within a socket because the sealing surface 31 is firmly supported by the dimensioning ring over the majority of its axial length. The anchor portion of the sealing ring 30 is axially off-set from the primary sealing surface 31. If the sealing surface 31 and the anchor portion were not off-set in the axial direction, then the polyester, which is filled between the anchor ring 32 and the inner surface 37 of the sealing ring 30 might provide a firmer foundation for the primary sealing surface than the spoke portions 33 of the sealing ring, thereby providing uneven resistance to radial compression at regular circumferential intervals. This is, obviously, undesirable as it could lead to leakage.

Should the sealing ring 30 become damaged, it can simply be ripped away from the outer surface of the dimensioning ring 20. When this is done, the anchor ring 32 is torn and can be extracted via apertures formed in the dimensioning ring 20 by the spokes 33 during the moulding process. Once the sealing ring 30 is removed, a replacement seal can be fitted. The replacement seal can simply be a flat band or O-ring, such as used in conventional spigots, since such a seal can seat on the recessed outer diameter 23 formed in the dimensioning ring by the body of the sealing ring 30. If desired, the replacement seal can be provided with a series of radially inwardly projecting lugs corresponding to the arrangement, shape and size of the spokes of the sealing ring.

Although the above described embodiment relates to providing the sealing ring in a spigot dimensioning ring, the sealing ring could just as easily be provided in a dimensioning ring provided inside a socket mouth. Here, the anchor portion is merely provided on a radially outer, rather than inner side of the sealing ring body. It can however, still be formed from a series of spokes and a flat band, exactly as set out above.

Furthermore, the dimensioning ring need not, in either case, be moulded directly onto the pipe end. It could be affixed by some other means, such as deformation or by some intermediate substance such as an adhesive.

If desired, the sealing ring could be mechanically fixed to the dimensioning ring instead. This will depend, to a large extent upon the materials used. However, the dimensioning ring and sealing ring could be formed with mutually co-operating formations such as lugs and recesses, enabling, in this case, a snap-fit engagement.

Many further modifications and variations will become apparent to those versed in the art upon making reference to the foregoing. It is, however, to be understood that the invention is not limited to the embodiments described, but that the scope of the invention is determined rather by the appended claims.

## Claims

1. A spigot end or socket for a pipe; comprising a coaxial dimensioning ring, and a sealing ring arranged coaxially with the di+mensioning ring on an outer or inner surface thereof; wherein the sealing ring is at least partially embedded in the dimensioning ring.

2. A spigot end or socket according to Claim 1, wherein the dimensioning ring is factory moulded to the pipe spigot end or socket.

3. A spigot end or socket according to Claim 1 or 2, wherein the sealing ring is formed from an elastomer.

4. A spigot end or socket according to Claim 3, wherein the sealing ring is formed from rubber.

5. A spigot end or socket according to any preceding claim, wherein the pipe is formed from clay, concrete or cement.

6. A spigot end or socket in accordance with any preceding claim, wherein the dimensioning ring is configured to encircle an axial end region of a spigot and the sealing ring comprises a radially inwardly projecting anchor portion and the dimensioning ring is moulded so as to surround the anchor portion at least partially.

7. A spigot end or socket in accordance with Claim 6, wherein the anchor portion is annular and comprises one or more apertures extending axially therethrough, for allowing a through-flow of material for forming the dimensioning ring during a moulding process.

8. A spigot end or socket according to Claim 6, wherein the anchor portion is keyed to the dimensioning ring by a mechanical fixation.

9. A spigot end or socket according to Claim 8, wherein the mechanical fixation is a snap-fit engagement.

10. A spigot end or socket according to any one of Claims 6 to 9, wherein the anchor portion is axially off-set from a primary sealing surface of the sealing ring.

11. A spigot end or socket according to any one of Claims 6 to 10, wherein the sealing ring is located with the anchor portion closer to the axial end of the pipe than is the said primary sealing surface.

12. A spigot end or socket according to any one of Claims 6 to 11, wherein the anchor portion is formed from a radially inner ring connected to a radially inner surface of a body portion of the sealing ring by a plurality of radially extending spokes.

13. A spigot end or socket according to Claim 12, wherein one of the spokes is a sprue.

14. A spigot end or socket according to Claim 12 or 13, wherein the radially inner ring is in the form of a generally flat band.

15. A spigot end or socket according to any one of Claims 1 to 5, wherein the dimensioning ring is configured to fit in a socket mouth and the sealing ring comprises a radially outwardly projecting anchor portion and the dimensioning ring is moulded so as to surround the anchor portion at least partially.

16. A spigot end or socket according to Claim 15, wherein the anchor portion is annular and comprises one or more apertures extending axially therethrough, for allowing a through-flow of material for forming the dimensioning ring during a moulding process.

17. A spigot end or socket according to Claim 15 or 16, wherein the anchor portion is axially off-set from a primary sealing surface of the sealing ring.

18. A spigot end or socket according to any one of Claims 15 to 17, wherein the sealing ring is located with the anchor portion closer to the socket mouth than is the primary sealing surface.

19. A spigot end or socket according to any one of Claims 15 to 18, wherein the anchor portion is formed by a radially outer ring connected to a radially outer surface of a body portion of the sealing ring by a plurality of spokes.

20. A spigot end or socket according to Claim 19, wherein one of the spokes is a sprue.

21. A spigot end or socket according to any one of Claims 15 to 20, wherein the radially outer ring is a flat band.

22. A sealing ring for a spigot or socket according to any preceding claim, and comprising the features of the sealing ring set out in that claim.

23. A process for manufacturing a pipe spigot or socket comprising, in any appropriate order, the steps of:
(i) locating a pipe end coaxially within or around an annular sealing ring;
(ii) introducing a fluid material between the pipe end and the annular sealing ring; and
(iii) allowing the fluid material to solidify and retain the sealing ring in position.

24. A process according to Claim 23, wherein the fluid material is polyester, polyurethane or cement.

25. A process according to Claim 23 or 24, wherein the sealing ring is formed from an elastomer.

26. A process according to Claim 25, wherein the sealing ring is formed from rubber.

27. A process according to any one of Claims 23 to 26, wherein the pipe end and sealing ring are located concentrically within a mould during the manufacturing process.

28. A process according to Claim 27, wherein the mould contains an annular recess on a bottom surface thereof, the recess being provided with an annular seal for preventing the passage of molten material past an end surface of the pipe end.

29. A process according to Claim 27 or 28, wherein a closure ring is used to close a junction between the sealing ring and a wall of the mould.

30. A process according to any one of Claims 23 to 29, wherein the sealing ring is provided with a radially inwardly or outwardly directed anchor portion.

31. A process according to Claim 30, wherein the anchor portion comprises apertures and the fluid material is caused to flow through the apertures, so as to surround, at least partially, the anchor portion.
